# EUROPEAN PATENT APPLICATION

(11) **EP 4 487 689 A1**
(43) Date of publication of application: **08.01.2025**
(21) Application number: 23759613.5
(22) Date of filing: 01.02.2023
(51) Int. Cl.: A23D 9/007, A23C 11/06, A23D 9/00, A23L 9/20, A23J 3/14, A23J 3/16, A23J 3/18, A23J 3/20, A23J 3/30

(54) **HYDROPHILIC POWDERED OIL AND FAT AND METHOD FOR PRODUCING SAME**

(30) Priority: 28.02.2022 JP 2022029606; 20.10.2022 JP 2022168704
(71) Applicant: Fuji Oil Holdings Inc., Izumisano-shi, Osaka 598-8540 (JP)
(72) Inventor: MIZUSHIMA, Shigeki, Tsukubamirai-shi, Ibaraki 300-2436 (JP); UEYAMA, Tomoki, Izumisano-shi, Osaka 598-8540 (JP); TAKAGI, Kenta, Izumisano-shi, Osaka 598-8540 (JP); KANO, Hiroshi, Izumisano-shi, Osaka 598-8540 (JP); INOUE, Ryota, Izumisano-shi, Osaka 598-8540 (JP)
(74) Representative: Becker, Eberhard
(86) International application number: PCT/JP2023/003282
(87) International publication number: WO 2023/162607

(57) **Abstract**

Emulsion stability of hydrophilic powdered oil and fat prepared using a protein other than milk proteins, such as a soybean protein is insufficient. Thus, the purpose of the present invention is to select a protein having strong emulsification performance beyond conventional proteins and to produce hydrophilic powdered oil and fat using same. This hydrophilic powdered oil and fat can be obtained by drying an oil-in-water type emulsion that includes, based on 100 parts by mass of oil and fat, 5 parts by mass or more of a protein material having the following properties. Provided that the protein material has the following properties: after an aqueous solution with a crude protein amount of 20% by mass is heated at 80°C for 30 minutes, the viscosity measured at 25°C is 10,000 mPa·s or less, the 0.22M TCA solubilization rate is 30%-95%, and the NSI is 80 or more.

## Description

### Technical Field

The present invention relates to a hydrophilic powdered oil and/or fat and a method for producing the same.

### Background Art

Oil and/or fat products such as butter, margarine, and shortening are used for various purposes such as improving physical properties of dough and imparting flavor thereto. On the other hand, these oil and/or fat products have hydrophobicity, and it is difficult to uniformly mix and stably hold the oil and/or fat products when the oil and/or fat products are used in a water-rich product or a water-rich production process. Thus, powdered oil and/or fat obtained by coating oil and/or fat with an excipient such as a milk protein, an emulsifier, or a carbohydrate are used. The powdered oil and/or fat can be obtained by stirring and homogenizing an aqueous phase containing a milk protein and an excipient and an oil phase to form an oil-in-water emulsion, and then drying and powdering the emulsion.

Representative examples of the powdered oil and/or fat include an instant creaming powder (ICP) used for coffee and the like, and this powder is prepared using a milk protein, oil and/or fat, and a carbohydrate such as sugar or dextrin as raw materials, and using an emulsifier as necessary. In recent years, there is a movement to repel animal raw materials and chemical substances due to problems such as continuous raw material supply and health, and for example, ICP using no milk protein has been proposed. Patent Documents 1 and 2 disclose ICP by powdered oil and/or fat using soybean protein.

### Citation List

### Patent Document

Patent Document 1: WO 2017/010513 A
Patent Document 2: WO 2009/084529 A

### Summary of Invention

### Technical Problem

Hydrophilic powdered oil and/or fat prepared using protein other than milk, such as soybean protein, does not have sufficient emulsion stability. For example, Patent Documents 1 and 2 also use an emulsifier in combination. Thus, an object of the present invention is to select a protein having strong emulsifiability, which is enhanced over a known protein, and to produce a hydrophilic powdered oil and/or fat using the selected protein.

### Solution to Problem

As a result of intensive studies to solve the above problems, the present inventors have found that when a protein material having specific properties is selected and used, a stable hydrophilic powdered oil and/or fat, which has been difficult to obtain with known soybean proteins, is obtained, and have completed the present invention.

That is, the present invention provides:
(1) a hydrophilic powdered oil and/or fat containing 3 parts by mass or more of a protein material having properties described below based on 100 parts by mass of an oil and/or fat, wherein the protein material has properties such that an aqueous solution of the protein material having a crude protein content of 20 mass% exhibits a viscosity of 10000 mPa·s or less as measured at 25°C after being heated at 80°C for 30 minutes, and the protein material has a 0.22 M TCA solubility of from 30% to 95%.
(2) The hydrophilic powdered oil and/or fat according to (1), wherein the protein material has an NSI of 80 or more.
(3) The hydrophilic powdered oil and/or fat according to (1), wherein when dispersed in water, the hydrophilic powdered oil and/or fat forms an oil-in-water emulsion having an average emulsion particle size of 3 µm or less.
(4) The hydrophilic powdered oil and/or fat according to (1), wherein the protein material has an NSI of 80 or more, and when dispersed in water, the hydrophilic powdered oil and/or fat forms an oil-in-water emulsion having an average emulsion particle size of 3 µm or less.
(5) The hydrophilic powdered oil and/or fat according to any one of (1) to (3), wherein the hydrophilic powdered oil and/or fat is an instant creaming powder.
(6) The instant creaming powder according to (5), wherein the instant creaming powder contains 30 mass% or more of an oil and/or fat and 10 mass% or more of a carbohydrate, and a total mass of the oil and/or fat and the carbohydrate is 50 mass% or more of dry mass.
(7) The hydrophilic powdered oil and/or fat according to (4), wherein the hydrophilic powdered oil and/or fat is an instant creaming powder.
(8) The instant creaming powder according to (7), wherein the instant creaming powder contains 30 mass% or more of an oil and/or fat and 10 mass% or more of a carbohydrate, and a total mass of the oil and/or fat and the carbohydrate is 50 mass% or more of dry mass.
(9) A method for producing a hydrophilic powdered oil and/or fat, the method including drying an oil-in-water emulsion containing 3 parts by mass or more of a protein material having properties described below based on 100 parts by mass of an oil and/or fat, wherein the protein material has properties such that an aqueous solution of the protein material having a crude protein content of 20 mass% exhibits a viscosity of 10000 mPa·s or less as measured at 25°C after being heated at 80°C for 30 minutes; the protein material has a 0.22 M TCA solubility of from 30% to 95%; and the protein material has an NSI of 80 or more.
(10) The method for producing a hydrophilic powdered oil and/or fat according to (9), wherein a plant milk is used for a part or all of the oil and/or fat.
(11) The method for producing a hydrophilic powdered oil and/or fat according to (9), wherein the hydrophilic powdered oil and/or fat is an instant creaming powder.
(12) The method for producing a hydrophilic powdered oil and/or fat according to (10), wherein the hydrophilic powdered oil and/or fat is an instant creaming powder.
(13) A method for producing the instant creaming powder described in (11), wherein the instant creaming powder contains 30 mass% or more of an oil and/or fat and 10 mass% or more of a carbohydrate, and a total mass of the oil and/or fat and the carbohydrate is 50 mass% or more of dry mass.
(14) A method for producing the instant creaming powder described in (12), wherein the instant creaming powder contains 30 mass% or more of an oil and/or fat and 10 mass% or more of a carbohydrate, and a total mass of the oil and/or fat and the carbohydrate is 50 mass% or more of dry mass.
(15) A method for producing a granulated product, the method including granulating a hydrophilic powdered oil and/or fat or an instant creaming powder produced by the method described in any one of (9) to (14).

The present invention can also provide the following aspects.
(1) A hydrophilic powdered oil and/or fat containing 3 parts by mass or more of a protein material having properties described below based on 100 parts by mass of an oil and/or fat, wherein the protein material has properties such that an aqueous solution of the protein material having a crude protein content of 20 mass% exhibits a viscosity of 10000 mPa·s or less as measured at 25°C after being heated at 80°C for 30 minutes, and the protein material has a 0.22 M TCA solubility of from 30% to 95%.
(2) The hydrophilic powdered oil and/or fat according to (1), wherein the protein material has an NSI of 80 or more.
(3) The hydrophilic powdered oil and/or fat according to (1) or (2), wherein when dispersed in water, the hydrophilic powdered oil and/or fat forms an oil-in-water emulsion having an average emulsion particle size of 3 µm or less.
(4) The hydrophilic powdered oil and/or fat according to any one of (1) to (3), wherein the hydrophilic powdered oil and/or fat is an instant creaming powder.
(5) The instant creaming powder according to (4), wherein the instant creaming powder contains 30 mass% or more of an oil and/or fat and 10 mass% or more of a carbohydrate, and a total mass of the oil and/or fat and the carbohydrate is 50 mass% or more of dry mass.
(6) A method for producing a hydrophilic powdered oil and/or fat, the method including drying an oil-in-water emulsion containing 3 parts by mass or more of a protein material having properties described below based on 100 parts by mass of an oil and/or fat, wherein the protein material has properties such that an aqueous solution of the protein material having a crude protein content of 20 mass% exhibits a viscosity of 10000 mPa·s or less as measured at 25°C after being heated at 80°C for 30 minutes; the protein material has a 0.22 M TCA solubility of from 30% to 95%; and the protein material has an NSI is 80 or more.
(7) The method for producing a hydrophilic powdered oil and/or fat according to (6), wherein a plant milk is used for a part or all of the oil and/or fat.
(8) The hydrophilic powdered oil and/or fat according to (6) or (7), wherein the hydrophilic powdered oil and/or fat is an instant creaming powder.
(9) A method for producing the instant creaming powder described in (8), wherein the instant creaming powder contains 30 mass% or more of an oil and/or fat and 10 mass% or more of a carbohydrate, and a total mass of the oil and/or fat and the carbohydrate is 50 mass% or more of dry mass.
(10) A method for producing a granulated product, the method including granulating a hydrophilic powdered oil and/or fat or an instant creaming powder produced by the method described in any one of (6) to (9).

### Description of Embodiments

The present invention will be described in detail below.

### Hydrophilic powdered oil and/or fat

The powdered oil and/or fat of the present invention is powder particles containing a large amount of oil and/or fat, being solid at normal temperature, and having a particle diameter of 5 mm or less, preferably 2 mm or less, more preferably 500 µm or less, and most preferably 200 µm or less. The hydrophilic powdered oil and/or fat of the present invention has oil droplets in a hydrophilic structure, and is different from a hydrophobic powdered oil and/or fat obtained by crushing a solid fat.

When the hydrophilic powdered oil and/or fat of the present invention is dispersed in water, the hydrophilic structure is easily dissolved and an oil-in-water emulsion in which oil droplets are dispersed is obtained.

In the hydrophilic powdered oil and/or fat of the present invention, a vegetable raw material such as vegetable oil and/or fat, vegetable protein, and carbohydrate derived from plant is preferably used as a part or all of the raw materials. Therefore, animal raw materials such as milk and eggs may be included in a part of the raw materials. In particular, hydrophilic powdered oil and/or fat in which 50 mass% or more, 60 mass% or more, 70 mass% or more, 80 mass% or more, or 90 mass% or more of all raw materials is a vegetable raw material is preferable, and hydrophilic powdered oil and/or fat in which 100 mass% is a vegetable raw material is preferable. In addition, hydrophilic powdered oil and/or fat containing no synthetic emulsifier described later is also preferable.

### Oil and/or fat

The oil and/or fat of the present invention is oil and/or fat generally used for food applications, and examples thereof include triglycerides such as soybean oil, rapeseed oil, corn oil, safflower oil, rice oil, cottonseed oil, sunflower oil, sesame oil, olive oil, peanut oil, lard, beef tallow, and medium-chain fatty acid oil; and products obtained by modifying these triglycerides by transesterification, hydrogenation, or the like. Oils and/or fats having a middle melting point of about from 20 to 40°C, such as palm oil, palm kernel oil, coconut oil, cocoa butter, transesterified oil, and hydrogenated oil, are suitable for some applications. Fish oil, linseed oil, perilla oil, and algal oil containing a large amount of polyunsaturated fatty acid (for example, eicosapentaenoic acid, docosahexaenoic acid, arachidonic acid, and γ-linolenic acid) and the like, and oils and/or fats obtained by concentrating some fatty acids from these oils are also included. Since the present invention also has an effect of suppressing oxidation of oil and/or fat, oil and/or fat having a large amount of polyunsaturated fatty acids are preferable.

Also, what is called plant milk obtained by extracting or crushing and suspending oilbased crops such as coconut, almond, peanut, cashew nut, macadamia nut, and pistachio with water can use a portion corresponding to the oil and/or fat. Coconut and almond are preferable, and are referred to as coconut milk and almond milk, respectively.

### Protein material

A protein material used in the present invention needs to have a low viscosity after heating. Specifically, the viscosity after heating can be measured as follows. An aqueous solution of the protein material is prepared so as to have a crude protein content of 20 mass%, the aqueous solution is heated at 80°C for 30 minutes, and then the viscosity of the aqueous solution is measured at 25°C. The viscosity after heating is 10000 mPa·s or less, preferably 5000 mPa·s or less, 1000 mPa·s or less, and 500 mPa·s or less, and more preferably 200 mPa·s or less, and 100 mPa·s or less.

The protein material requires a molecular weight of a certain size. The molecular weight is defined by a TCA solubility. In the present invention, the TCA solubility is defined by the ratio of the amount of crude protein dissolved in 0.22M TCA to the total crude protein content. The TCA solubility is from 30 to 95%, preferably from 35 to 90%, more preferably from 40 to 85% and from 50 to 80%. When the TCA solubility is too low, the viscosity after heating tends to increase, which is not suitable, and transmittance decreases. On the other hand, when the TCA solubility is too high, the amount of the protein contributing to emulsifiability decreases, and it is necessary to add a large amount of a protein material, so that a degree of freedom of formulation decreases, which is not preferable.

The present protein material preferably has an NSI (nitrogen solubility index) used as an index of protein solubility of 80 or more. More preferably, the protein material having an NSI of 85 or more, 90 or more, 95 or more, or 97 or more can be used. A high NSI of the protein material indicates high dispersibility in water and can contribute to dispersion stability of the oil-in-water emulsion composition of the present invention. The protein material with a too low NSI would tend to cause precipitation, which is not preferred. The crude protein content in the protein material is also preferably 30 mass% or more, more preferably 50 mass% or more, and most preferably 70 mass% or more. A protein material having a higher crude protein content can exhibit its function in a smaller amount.

Such a protein material is not generally commercially available, and can be obtained by a denaturation and molecular weight adjustment treatment and the like described later. Commercially available soybean protein materials such as FUJIPRO R, FUJIPRO 748, FUJIPRO CL, and HINUTE AM (all available from Fuji Oil Co., Ltd.) do not fall under this requirement.

Although the origin of the protein material to be prepared is not particularly limited, plant-derived, animal-derived, or microorganism-derived proteins can be used. Examples of the plant protein include proteins derived from legumes, such as soybean, pea, mung bean, lupin bean, chickpea, kidney bean, lentil bean, and cowpea; seeds, such as sesame, canola seed, coconut seed, and almond seed; grains, such as corn, buckwheat, wheat, and rice; vegetables; fruits; algae; and microalgae. For example, a protein material derived from soybean is prepared by further concentrating and processing protein from a soybean material, such as defatted soybean or whole soybean, and in general, examples conceptually include soybean protein isolates, soybean protein concentrates, soybean milk powder, or various processed products of those.

Examples of the animal protein include egg proteins containing ovalbumin, casein, whey, lactalbumin, milk proteins such as lactalbumin, proteins derived from blood such as plasma, serum albumin, and decolorized hemoglobin, proteins derived from meat, and proteins derived from fish and shellfish. In addition, proteins derived from microorganisms such as yeasts, molds and bacteria can be used. Even in a protein having poor solubility in water, a protein material that can be used in the present invention can be prepared by the treatment described below.

### Denaturation and molecular weight adjustment treatment

The protein material used in the oil-in-water emulsion of the present invention can be obtained by applying combination of "degradation/denaturation treatment" for degrading and/or denaturing a protein and "molecular weight distribution adjustment treatment" for adjusting molecular weight distribution of the protein. Examples of the "degradation/denaturation treatment" include pH adjustment treatment (e.g., acid treatment or alkali treatment), denaturant treatment, heating treatment, cooling treatment, high-pressure treatment, organic solvent treatment, mineral addition treatment, supercritical treatment, ultrasonic treatment, electrolysis treatment, and combination of these. Examples of the "molecular weight distribution adjustment treatment" include filtration, gel filtration, chromatography, centrifugation, electrophoresis, dialysis, and combination of these. The order and number of the "degradation/denaturation treatment" and the "molecular weight distribution adjustment treatment" are not particularly limited; the "degradation/denaturation treatment" may be performed before the "molecular weight distribution adjustment treatment", the "molecular weight distribution adjustment treatment" may be performed before the "degradation/denaturation treatment", or both treatments may be performed at the same time. In addition, for example, it is also possible to perform the "degradation/denaturation treatment" between two or more times of the "molecular weight distribution adjustment treatment", to perform the "molecular weight distribution adjustment treatment" between two or more times of the "degradation/denaturation treatment", or to perform each treatment a plurality of times in any order. In a case where a desired molecular weight distribution is obtained by the "degradation/denaturation treatment, the "molecular weight distribution adjustment treatment" need not be performed. When these treatments are combined and performed a plurality of times, all the treatments may be performed continuously from raw materials or may be performed at time intervals. For example, a commercially available product that has undergone a certain treatment may be used as a raw material to perform another treatment. As long as the above properties are satisfied, the specific protein material may be obtained by mixing a protein material that has undergone the molecular weight distribution adjustment treatment with a protein material that has not undergone the molecular weight distribution adjustment treatment. In this case, the ratio of the two (protein material that has undergone the treatment: protein material that has not undergone the treatment) can be adjusted as appropriate within a range that satisfies the properties described above, but may be, for example, from 1:99 to 99:1, for example, from 50:50 to 95:5, or from 75:25 to 90:10, in terms of mass ratio. In an embodiment, the protein material used in the oil-in-water emulsion of the present aspect is composed of a protein material that has undergone the "degradation/denaturation and molecular weight distribution adjustment treatments".

The conditions of the treatment for degrading or denaturing a protein, for example, types and concentrations of an enzyme, pH, an organic solvent, a mineral, and the like, a temperature, a pressure, an output intensity, an electric current, and time, can be appropriately set by those skilled in the art. In the case of an enzyme, examples of the enzyme to be used include proteases that are classified into "metal proteases", "acidic proteases", "thiol proteases", and "serine proteases". The reaction can be carried out at a reaction temperature of from 20 to 80°C and preferably of from 40 to 60°C. In the case of pH adjustment treatment, the treatment can be performed in a pH range including any values of pH 2, 2.5, 3, 3.5, 4, 4.5, 5, 5.5, 6, 6.5, 7, 7.5, 8, 8.5, 9, 9.5, 10, 10.5, 11, 11.5, and 12 as the upper limit and the lower limit, for example, in a range of pH from 2 to 12. In the case of acid treatment, the method may be a method of adding an acid or a method of performing fermentation treatment, such as lactic acid fermentation. Examples of the acid to be added include inorganic acids, such as hydrochloric acid and phosphoric acid; and organic acids, such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food or drink containing an acid, such as fruit juice of lemon or the like, concentrated fruit juice, fermented milk, yogurt, or brewed vinegar. In the case of alkali treatment, an alkali, such as sodium hydroxide or potassium hydroxide, can be added. In the case of denaturant treatment, a denaturant, such as guanidine hydrochloride, urea, arginine, or PEG, may be added. In the case of heating or cooling treatment, examples of the heating temperature include ranges including any temperatures of 60°C, 70°C, 80°C, 90°C, 100°C, 110°C, 120°C, 125°C, 130°C, 135°C, 140°C, 145°C, and 150°C as the upper limit and the lower limit, for example, a range of from 60°C to 150°C. Examples of the cooling temperature include ranges including any temperatures of -10°C, -15°C, -20°C, -25°C, - 30°C, -35°C, -40°C, -45°C, -50°C, -55°C, -60°C, -65°C, -70°C, and -75°C as the upper limit and the lower limit, for example, a range of from -10°C to -75°C. Examples of the heating or cooling time include ranges including any times of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes as the upper limit and the lower limit, for example, a range of from 5 seconds to 200 minutes. In the case of high-pressure treatment, examples of the condition of the pressure include ranges including any pressures of 100 MPa, 200 MPa, 300 MPa, 400 MPa, 500 MPa, 600 MPa, 700 MPa, 800 MPa, 900 MPa, and 1000 MPa as the upper limit and the lower limit, for example, a range of from 100 MPa to 1000 MPa. In the case of organic solvent treatment, examples of the solvent to be used include alcohols and ketones, for example, ethanol and acetone. In the case of mineral addition treatment, examples of the mineral to be used include divalent metal ions, such as calcium and magnesium. In the case of supercritical treatment, the treatment can be performed, for example, using carbon dioxide in a supercritical state at a temperature of about 30°C or higher and a pressure of about 7 MPa or more. In the case of ultrasonic treatment, the treatment can be performed, for example, by irradiation with an output of from 100 to 1000 W at a frequency of from 100 KHz to 2 MHz. In the case of electrolysis treatment, for example, a protein aqueous solution can be treated by applying a voltage of from 100 mV to 1000 mV. In a specific embodiment, the treatment to degrade and/or denature a protein is selected from denaturant treatment, heating treatment, and combinations of those.

The conditions of the treatment for adjusting molecular weight distribution of a protein, for example, a type of filter medium, a carrier for gel filtration, the centrifugal rotation number, an electric current, and time, can be appropriately set by those skilled in the art. Examples of the filter medium include filter paper, filter cloth, diatomaceous earth, ceramics, glass, and membranes. Examples of the carrier for gel filtration include dextran and agarose. Examples of the conditions of centrifugation include conditions of from 1000 to 3000 × g and of from 5 to 20 minutes.

### Synthetic emulsifier

In the present invention, it is not necessary to actively blend the synthetic emulsifier. It is also preferred to perform blending in which no synthetic emulsifier is contained.

The synthetic emulsifier according to the present invention is specifically a substance that utilizes its emulsifiability for food applications, such as polyglycerin fatty acid ester, sucrose fatty acid ester, sodium stearoyl lactate, calcium stearoyl lactate, polyoxyethylene derivative, fatty acid salt, and processed starch, and requires a chemical reaction for production.

### Composition

In the hydrophilic powdered oil and/or fat of the present invention, the oil and/or fat and the protein material are used as the minimum constituent. In the ratio, the protein material is 3 parts by mass or more, preferably 8 parts by mass or more, and more preferably 20 parts by mass or more, based on 100 parts by mass of oil and/or fat. The upper limit is preferably 2000 parts by mass or less, and more preferably 500 parts by mass or less. When a relative amount of the protein material is too small, emulsification becomes insufficient, and coarsening and oxidation of an emulsion particle size easily occur. When the relative amount of protein is too large, it leads to a decrease in the amount of oil and/or fat in the powder described later.

In the present invention, it is also possible to add a substance other than the oil and/or fat and the protein material to the raw material, and the substance is typically a carbohydrate. The carbohydrate has an effect of improving strength of a powder and facilitating dissolution in water. Examples of the carbohydrate to be used include various starches, dextrins, oligosaccharides (maltose, lactose, glucose, fructose, and the like), and sugar alcohols (sorbitol, reduced maltose, and the like). In addition to the carbohydrate, various substances can be used as raw materials as necessary as long as they do not positively inhibit emulsification. Examples thereof include other proteins, peptides, amino acids, polysaccharides insoluble or soluble in water, organic acids, salts thereof, and various inorganic salts which are not included in the above requirements. On the other hand, it is preferable not to use an animal material. The animal material is animal protein or animal-derived seasoning, and examples thereof include casein and whey albumin.

The mass of the finally obtained hydrophilic powdered oil and/or fat is preferably 5 mass% or more, more preferably 30 mass% or more, and most preferably 50 mass% or more in the powder. The mass is preferably 90 mass% or less. When the amount of oil and/or fat in the hydrophilic powdered oil and/or fat is too large, emulsification becomes insufficient, and it becomes difficult to maintain the structure of the powder, so that it may be difficult to stably hold the powdered oil and/or fat. If the amount of oil and/or fat in the hydrophilic powdered oil and/or fat is too small, the original purpose of the powdered oil and/or fat cannot be achieved, the use is narrowed, and the use amount is excessive, for example, so that the utility value as the powdered oil and/or fat decreases.

### Preparation method

A preparation method will be described below. An oil and/or fat, a protein material, and another raw material are provided based on the above-described composition, and first, the protein material and another water-soluble raw material are dissolved in water to prepare an aqueous phase. The amount of water is preferably from 1.5 to 50 mass times, more preferably from 3 to 10 mass times the amount of the water-soluble raw material including the protein material. If the amount of the aqueous phase is too small, a load of drying to be described later is reduced; however, the subsequent emulsification may not be performed well. When the amount of the aqueous phase is too large, the subsequent emulsification may not be performed well as described above, and the load of drying becomes excessive. The temperature of water to be used is not particularly limited, and warm water is preferable, and from 60 to 80°C is suitable. When the temperature is low, the viscosity increases and workability deteriorates, and when the temperature is high, an oil-soluble component to be blended may deteriorate. The protein material used in the present invention is characterized by having a low viscosity after heating, and the aqueous phase prepared here also exhibits a low viscosity in spite of a high crude protein concentration.

For the oil and/or fat, if there is a necessary oil-soluble substance, this is added to the oil and/or fat, and then used as an oil phase. Depending on the fatty acid or the like constituting also the oil phase, warming is preferred, and, in many cases, preparation is carried out at a temperature not lower than a melting point thereof.

In addition, a plant milk or the like formed into an oil-in-water emulsion in advance is also treated as the oil phase in the sense that the oil-in-water emulsion is mixed with the aqueous phase and subjected to an emulsification treatment.

### Emulsification apparatus

The aqueous phase and the oil phase are mixed. At this time, preliminary emulsification is preferably performed. The preliminary emulsification is to prepare an oil-in-water emulsion having an emulsion particle size of about from 10 to 100 µm by treating with a homomixer or the like. Although the rotation speed varies depending on the device, for example, in the case of HOMOGENIZING MIXER MARK II Model 2.5 available from PRIMIX Corporation, processing at 8000 rpm for about 10 minutes can be exemplified.

Subsequently, main emulsification is performed. Although the emulsification is not particularly limited, an emulsification apparatus having a high shear force is preferable, and examples thereof include a homomixer, a colloid mill, a high-pressure homogenizer, an ultrahigh pressure homogenizer, and a vacuum emulsifier. Specifically, an APV Gaulin homogenizer (available from APV), a microfluidizer (available from Microfluidex International Corp.), an ultimizer (available from Sugino Machine Limited), a nanomizer (available from DAIWA CAN COMPANY) or the like can be preferably used.

It is preferable to perform emulsification at a pressure of 10 MPa or more using these high pressure emulsifying devices. When a high-pressure homogenizer is exemplified, it is effective to perform shearing treatment at a pressure of preferably 15 MPa or more, more preferably 40 MPa or more. In addition, the shearing treatment may be performed a plurality of times.

By these emulsification treatments, the emulsion particle size of the oil-in-water emulsion is set to approximately from 0.2 to 2 µm.

### Drying

The oil-in-water emulsion prepared above is dried to obtain a hydrophilic powdered oil and/or fat. As a method for drying and powdering the oil-in-water emulsion, a generally known spray drying method, vacuum freeze drying method, vacuum drying method, or the like can be used. Among these, spray-dried powdered oil and/or fat obtained by a spray drying method is preferable. In the case of spray drying, a disk-type atomizer method, spray drying by a one-fluid or two-fluid nozzle, or the like can be used. Examples of the drying conditions include a hot air temperature of from 100 to 200°C and a discharge air temperature of from 50 to 100°C. By drying the oil-in-water emulsion described above under the present conditions, powder particles containing 15 mass% or less, preferably 10 mass% or less, and more preferably 5 mass% or less of moisture and having a particle diameter of about from 1 µm to 1 mm, preferably about from 3 µm to 500 µm, and still more preferably about from 5 µm to 200 µm can be obtained. This prepared powder is the hydrophilic powdered oil and/or fat of the present invention.

### Granulated product

When a powder particle diameter of the hydrophilic powdered oil and/or fat is small, the hydrophilic powdered oil and/or fat may exhibit properties such as high scattering properties, high hygroscopicity, low fluidity, and high cohesiveness, and may be difficult to be dispersed and dissolved in a liquid. In order to improve this, a granulation treatment can be performed.

Examples of the granulation method include granulation methods such as fluidized bed granulation, tumbling granulation, and coating granulation; however, any method capable of granulating a hydrophilic powdered oil and/or fat can be suitably used, and the granulation method is not limited thereto. In particular, the fluidized bed granulation is excellent in that a high-quality granulated product can be efficiently produced. In the granulation treatment, a suitable binder can be selected and used.

The obtained granulated product shows various states such as granules having a diameter increased by securing particles to each other and particles incorporating fine powder depending on conditions, and all products show high fluidity and dispersion solubility.

### Emulsion particle size

The hydrophilic powdered oil and/or fat of the present invention easily becomes an oil-in-water emulsion by being dispersed in water. The emulsion preferably has an emulsion particle size of 3 µm or less. The emulsion particle size is more preferably 2 µm or less, and most preferably 1 µm or less. When the emulsion particle size exceeds 3 µm, oxidation of the oil and/or fat is accelerated, or the oil is more likely to be deposited on a powder surface.

The emulsion of the present invention and its raw materials are evaluated by the following procedures.

### Water content

The water content is determined by an ordinary pressure heating loss method (105°C 12 hours).

### Crude protein content

The crude protein content is measured by the Kjeldahl method. Specifically, the mass of nitrogen measured by the Kjeldahl method relative to the weight of a protein material is represented by "mass%" as a crude protein content of the dried product. The nitrogen conversion coefficient is 6.25. Basically, the value is calculated by rounding the value of the second decimal place.

### NSI

60 ml of water is added to 3 g of a sample, followed by propeller stirring at 37°C for 1 hour and centrifugation at 1400 × g for 10 minutes to collect a supernatant (I). Next, 100 ml of water is again added to the remaining precipitate, and the mixture is again stirred with a propeller at 37°C for 1 hour and then centrifuged to collect a supernatant (II). The supernatants (I) and (II) are combined, and water is added to the mixed liquid to make it 250 ml. After the mixed liquid is filtered with filter paper (No. 5), a nitrogen content of the filtrate is measured by the Kjeldahl method. At the same time, the nitrogen amount in the sample is measured by the Kjeldahl method, and the proportion of the amount of nitrogen recovered as the filtrate (water-soluble nitrogen) to the total amount of nitrogen in the sample is expressed in mass% and is defined as the NSI. Basically, the value is calculated by rounding the value of the second decimal place.

### TCA solubility

To a 2 mass% aqueous solution of a protein material, 0.44 M trichloroacetic acid (TCA) is added in an equal amount to prepare a 0.22 M TCA solution, and a TCA solubility is a value obtained by measuring the ratio of soluble nitrogen by the Kjeldahl method. Basically, the value is calculated by rounding the value of the second decimal place.

### Viscosity after heating

The viscosity of the protein material is measured using a B-type viscometer (Type BM available from TOKISANGYO). An aqueous protein material solution is prepared so as to have a crude protein content of 20 mass%, and charged in a measurement container, a rotor is set, and the container is sealed, and then heated at 80°C for 30 minutes in a hot water bath. Next, the viscosity is measured at an arbitrary rotation speed at 25°C, the pointer value is read, and the viscosity is calculated by multiplying a rotor No. and a conversion multiplier corresponding to the rotation speed. (Unit: Pa·s) The measured value after 1 minute is used. Basically, the rotation speed is set to 60 rpm. For a sample having a high viscosity, the rotor No. is changed from 1 to 4, and the rotation speed is decreased to 6 rpm. A measurement upper limit viscosity in this measurement is 100000 mPa·s. When the rotor No. 4 and the rotation speed of 6 rpm exceed the measurement range, the viscosity after heating is immediately determined to be 100000 mPa·s or more.

### Emulsion particle size

The emulsion particle size is measured by mixing 1 g of a sample of hydrophilic powdered oil and/or fat with 19 g of water, redissolving the mixture with a touch mixer, then using a laser diffraction type particle size analyzer "SALD-2300" available from Shimadzu Corporation, and using a solvent as water. The median diameter D50 is taken as the particle diameter.

### Powder particle diameter

The powder particle diameter is measured by mixing 0.1 g of a sample of hydrophilic powdered oil and/or fat with 10 ml of isopropanol, redissolving the mixture with a touch mixer, then using a laser diffraction type particle size analyzer "SALD-2300" available from Shimadzu Corporation, and using the same solvent. The median diameter D50 is taken as the particle diameter.

### Evaluation of ICP suitability

Suitability of an instant creaming powder (ICP) is evaluated using coffee. 2 g of commercially available instant coffee is dissolved in warm water at 75°C to make 140 ml, and the mixture is used as coffee. A commercially available coffee whitener or hydrophilic powdered oil and/or fat as each sample is added as oil and/or fat so as to be 1.1 g, and items including whitening property, feathering, and oil-off are evaluated. As the evaluation criteria for each item, a commercially available coffee whitener (Bright available from Nestle Japan Limited, lipid 36.5 mass%) is used. 3 or more points in each item are determined to be acceptable.
· Whitening property
   4 points: white turbidity equivalent to control.
   3 points: less turbidity compared to control.
   2 points: clearly less turbidity compared to control.
   1 point almost no turbidity.
· Feathering
   4 points: no feathering at all.
   3 points: sight feathering is observed.
   2 points: clear feathering is observed.
   1 point: aggregate is observed.
· Oil-off
   4 points: no oil droplets at all on the surface.
   3 points: a small amount of oil droplets of 1 mm or less are observed.
   2 points: oil droplets of 1 mm or more are observed.
   1 point: oil droplets of 5 mm or more are observed.

### Measurement of penetration

1 g of a sample is uniformly disposed on filter paper (No. 2, Φ70 mm, available from ADVANTEC), and sandwiched by another sheet. A load of 5 kg is uniformly applied, and the sample is allowed to stand for 1 minute. Thereafter, the sample is removed, and a weight change of the two filter papers is defined as an amount of penetrating lipid. When a ratio of the penetrating lipid to the sample is 0.5 mass% or less, the sample is determined to be acceptable.

### Evaluation of oxidation stability

A sample powder is placed in a polyethylene bag without being replaced with nitrogen, and stored in a light-shielding manner at 40°C for 60 days. After leaving at room temperature for 1 hour, scoring is performed according to the following criteria by consultation of five panelists, and 3 or more points are determined to be acceptable.
5 points: an odor associated with oxidation of highly unsaturated fatty acid is not felt.
4 points: although two or less panelists feel an odor associated with oxidation of highly unsaturated fatty acid, it is judged that the odor is at a level not causing a problem.
3 points: although a slight odor associated with oxidation of highly unsaturated fatty acid is felt, it is judged to be within an acceptable range.
2 points: an odor associated with oxidation of highly unsaturated fatty acid is felt, and it is judged that the odor exceeds the acceptable range.
1 point: a considerably strong odor associated with oxidation of highly unsaturated fatty acid is felt.

### Measurement of extracted oil POV

A sample powder is placed in a polyethylene bag without being replaced with nitrogen, and stored in a light-shielding manner at 60°C for 30 days. 300 g of n-hexane is added to 30 g of each sample, stirred and extracted, and then a hexane layer is separated by filtration. For an extracted oil from which hexane has been removed under reduced pressure, a peroxide value (POV) is measured in accordance with Japan Standard Methods for The Analysis of Fats, Oils and Related Materials 2.5.2.1-2013 Peroxide Value (acetic acid-isooctane method), and a value of 10 or less is judged to be acceptable.

### Application

The hydrophilic powdered oil and/or fat of the present invention can be widely applied to processed foods, beverages, health foods, and the like in which addition of an oily substance is desired.

### Instant creaming powder

The present invention is suitable for instant creaming powder (ICP). ICP is a powdered oil and/or fat that contains a large amount of fat to be added to coffee or the like and is easily dissolved and dispersed. Although casein has been essential in the known art, according to the present invention, the same function can be exhibited without using casein and without positively using a synthetic emulsifier.

According to the present invention, it is possible to obtain highly versatile ICP without an unpleasant odor such as milky smell, acerbity, or astringency due to blending of a milk-derived raw material such as casein or an emulsifier. This makes it possible to enhance the flavor of the material when mixed with other coffee, other flavor (for example, green tea or caramel), or food (for example, retort foods, instant foods such as soup, breads, chocolate sauces, curry roux, and condiments such as dressing). In addition, ICP without an allergen such as milk can be obtained.

Carbohydrates for assisting dispersion are essential for ICP, and examples thereof include dextrin, oligosaccharides (maltose, lactose, glucose, fructose, and the like), and sugar alcohols (sorbitol, maltitol, and the like).

It is preferable that the amount of oil and/or fat is 30 mass% or more, the amount of carbohydrate is 10 mass% or more, and a total amount of oil and/or fat and carbohydrate is 50 mass% or more in the powder. The amount of the oil and/or fat is more preferably 40 mass% or more, 50 mass% or more, or 60 mass% or more, the amount of the carbohydrate is more preferably 20 mass% or more, 30 mass% or more, or 40 mass% or more, and the total amount of the oil and/or fat and the carbohydrate is more preferably 50 mass% or more, 60 mass% or more, or 70 mass% or more.

### Physiological function enhancement

By using or adding an oil-soluble functional substance having a physiological function as an oil phase, it can be used as a so-called health food in which the physiological function is enhanced. At this time, since it is also possible to select not to use a synthetic emulsifier, a layer that repels these can also be used. Examples of the oil-soluble functional substance include plant sterol and plant estrogen in addition to fat-soluble vitamins, pigments such as carotenoid, and polyunsaturated fatty acids.

It is also possible to use or add, as an oil phase, a triglyceride that can be expected to have a physiological function, such as a polysaturated fatty acid triglyceride or a medium-chain fatty acid triglyceride (MCT). In particular, MCT is oil and/or fat that easily produces a ketone body, and the present invention product containing MCT can be used as a ketogenic diet for a ketogenic diet therapy.

### Other applications

The present invention can be widely substituted in fields where powdered oil and/or fat has been used. As an improvement of physical properties, and as an improvement of flavor, the present invention can be widely used for other purposes. Examples of the target food include, but are not limited to, instant foods such as instant noodles, retort foods, and soups; flour products such as breads, pastas, noodles, and cake mixes; confectioneries such as chocolates, biscuits, snacks, and desserts; seasonings such as sauces, curry roux, and dressings; oil and/or fat foods such as butters, mayonnaises, and margarines; processed milk; milk beverages; yogurts; lactic acid bacteria beverages; dairy products such as cheeses, ice creams, and creams; frozen foods; fish paste products; hams and sausages; and canned foods.

### Examples

Next, the present invention will be described in more detail with reference to Examples, but is not limited to only such Examples. In the following description, "parts" and "%" are "parts by mass" and "mass%", respectively, unless otherwise specified.

### Protein material

The following materials were used as protein materials.

Soybean protein material A: product obtained by degradation/denaturation and molecular weight distribution adjustment treatment of separated soybean protein. (Test product, Fuji Oil Co., Ltd., water content: 1.2%, crude protein content: 79.3%, TCA solubility: 61.8%, viscosity after heating: 28 mPa·s, NSI: 98.1), raw material separated soybean protein: FUJIPRO R (available from Fuji Oil Co., Ltd., crude protein content: 87.2%, TCA solubility: 3.2%,)

Pea protein material A: product obtained by degradation/denaturation and molecular weight distribution adjustment treatment of pea protein. (Test product, Fuji Oil Co., Ltd., water content: 1.1%, crude protein content: 72.4%, TCA solubility: 45.9%, viscosity after heating: 43 mPa·s, NSI: 98.9), raw material pea protein: PP-CS (available from ORGANO FOODTECH CORPORATION, crude protein content: 79.1%)

Almond protein material A: product obtained by degradation/denaturation treatment of almond protein (test product, Fuji Oil Co., Ltd., water content: 1.2%, crude protein content: 52.8%, TCA solubility: 55.8%, viscosity after heating: 325 mPa·s, NSI: 92.3), raw material almond milk powder: PP-CS (crude protein content: 28.8%, available from TSUKUBA DAIRY PRODUCTS CO., LTD.)

Wheat protein material A: product obtained by degradation/denaturation treatment of wheat protein (test product, Fuji Oil Co., Ltd., water content: 1.2%, crude protein content: 40.1%, TCA solubility: 50.4%, viscosity after heating: 355 mPa·s, NSI: 96.7), raw material powdery wheat protein: V-75 (available from GLICO NUTRITION CO., LTD., crude protein content: 71.8%)

Microorganism-derived protein material A: product obtained by degradation/denaturation treatment of microorganism-derived protein (test product, Fuji Oil Co., Ltd., water content: 1.2%, crude protein content: 43.9%, TCA solubility: 82.3%, viscosity after heating: 317 mPa·s, NSI: 98.5), raw material lipase preparation (available from Amano Enzyme Inc., crude protein content: 94.0%)

As other protein materials, the following were used.

Soy protein material B (FUJIPRO R, available from Fuji Oil Co., Ltd., crude protein content: 87.2%, TCA solubility: 3.2%, viscosity after heating: 100000 mPa·s or more, NSI: 81.2)

A soybean protein material D (FUJIPRO-CL, available from Fuji Oil Co., Ltd., crude protein content: 88.0%, TCA solubility: 23.0%, viscosity after heating: 100000 mPa·s or more, NSI: 65.0) was used.

A soybean protein material E (HINUTE AM, available from Fuji Oil Co., Ltd., crude protein content: 90.0%, TCA solubility: 100.0%, viscosity after heating: 20 mPa·s, NSI: 100) was used.

### Study on protein material

The raw materials of the aqueous phase were mixed according to the formulation in Table 1 to prepare an aqueous phase. The temperature of the aqueous phase was set to 60°C, and the oil phase was added thereto with stirring to be stirred, and thus to obtain a substantially emulsion. For stirring, a homomixer (HOMOGENIZING MIXER MARK-II available from PRIMIX Corporation, 6000 rpm, 5 minutes) was used. The substantially emulsion was subjected to 1-pass treatment at 18 MPa shown in the table using a high pressure homogenizer (APV 1000 available from SMT Co., Ltd.) to obtain an emulsion. The emulsion was subjected to spray drying to prepare a hydrophilic powdered oil and/or fat having a powder particle diameter of less than 100 µm (Examples 1 to 5, Comparative Examples 1 to 4). As spray drying conditions, hot air was 150°C, and exhaust air was 90°C.

As palm olein, "Palm Ace 10N" available from Fuji Oil Co., Ltd., as acacia gum, "Arabic Cole SS" available from San-Ei Yakuhin Boeki Co., Ltd., as monoglyceride, "RIKEMAL PP-100" available from Riken Vitamin Co., Ltd., as lecithin, "SLP-paste" available from Tsuji Oil Mills Co., Ltd., and as dextrin, "TK-16" available from Matsutani Chemical Industry Co., Ltd. were used.

**(Table 1) Study on various protein materials**

| (mass%) | | CP (%) | TCA (%) | Viscosity* (mPa·s) | NSI | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|---|---|---|
| Formulation Palm | olein | | | | | 70 | ← | ← | ← | ← | ← | ← | ← | ← |
| | Soybean protein material A | 80.3 | 61.8 | 28 | 98.1 | 30 | | | | | | | | |
| | Pea protein material A | 73.2 | 45.9 | 43 | 98.9 | | 30 | | | | | | | |
| | Almond protein material A | 53.4 | 55.8 | 325 | 92.3 | | | 30 | | | | | | |
| | Wheat protein material A | 40.6 | 50.4 | 355 | 96.7 | | | | 30 | | | | | |
| | Microorganism-derived protein material A | 44.4 | 82.3 | 317 | 98.5 | | | | | 30 | | | | |
| | Soybean protein material B | 90.4 | 3.2 | > 100000 | 81.2 | | | | | | 30 | | | |
| | Soybean protein material C | 91.1 | 23.0 | > 100000 | 65.0 | | | | | | | 30 | | |
| | Soybean protein material D | 92.1 | 100 | 20 | 100 | | | | | | | | 30 | |
| | Acacia gum | | | | | | | | | | | | | 30 |
| | Water | | | | | 100 | ← | ← | ← | ← | 300 | 200 | 100 | 300 |
| Conditions | Emulsification pressure (Mpa) | | | | | 18 | ← | ← | ← | ← | ← | ← | ← | ← |
| Evaluation | Emulsion particle size (µm) | | | | | 0.56 | 0.51 | 0.61 | 0.62 | 0.71 | 5.21 | 3.48 | 80.23 | 5.12 |

| | | | | | | | | | | | | | | |
|---|---|---|---|---|---|---|---|---|---|---|---|---|---|---|
| * Viscosity after heating | | | | | | | | | | | | | | |

The results are shown in Table 1. When the particle size of the resulting hydrophilic powdered oil and/or fat was confirmed after the hydrophilic powdered oil and/or fat was dissolved in water, it was found that in Examples 1 to 5 using a protein material having a viscosity and a TCA value within the specified values, an emulsion having a good emulsion particle size of 1 µm or less was obtained. On the other hand, in Comparative Examples 1 to 3 in which the viscosity or the TCA value of the protein material deviated from the specification and Comparative Example 4 in which the protein material was not used, the emulsion particle size was large.

### Study on oil and/or fat/protein ratio

According to the formulation and conditions in Table 2, hydrophilic powdered oil and/or fat was prepared in the same manner as in Example 1 (Examples 6 to 17, Comparative Example 5). The results are shown in Table 2, and it was found that an emulsion having an emulsion particle size of 2 µm or less was obtained except for Comparative Example 5 in which the protein material relative to the oil and/or fat was 1 mass%. In Examples 8 to 17 in which the content of the protein material relative to the oil and/or fat was 10 mass% or more, the emulsion particle size was 1 µm or less, which was very good.

**(Table 2) Study on oil and/or fat/protein ratio**

| | (mass%) | Comparative Example 5 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|
| Formulation | Palm olein Soybean | 99 | 97 | 95 | 90 | 80 | 70 | 60 | 50 | 40 | 30 | 20 | 10 | 5 |
| | protein material A | 1 | 3 | 5 | 10 | 20 | 30 | 40 | 50 | 60 | 70 | 80 | 90 | 95 |
| | Water | 100 | ← | ← | ← | ← | ← | 120 | 150 | 180 | 210 | 240 | 270 | 285 |
| Conditions | Emulsification pressure (Mpa) | 18 | ← | ← | ← | ← | ← | ← | ← | ← | ← | ← | ← | ← |
| Evaluation | Emulsion particle size (µm) | 10.21 | 1.92 | 1.39 | 0.77 | 0.61 | 0.56 | 0.52 | 0.49 | 0.45 | 0.40 | 0.36 | 0.30 | 0.23 |

### Study on oil and/or fat/dextrin ratio

According to the formulation and conditions in Table 3, hydrophilic powdered oil and/or fat was prepared in the same manner as in Example 1 (Examples 18 to 27). The results are shown in Table 3, and it was found that an emulsion having an emulsion particle size of 1 µm or less was obtained in all test blocks in which the amount of dextrin relative to the oil and/or fat was changed. Examples 19 to 27 in which dextrin was added in an amount of 18 mass% or more of the oil and/or fat were better.

**(Table 3) Study on oil and/or fat/dextrin ratio**

| | (mass%) | Example 18 | Example 19 | Example 20 | Example 21 | Example 22 | Example 23 | Example 24 | Example 25 | Example 26 | Example 27 |
|---|---|---|---|---|---|---|---|---|---|---|---|
| Formulation | Palm olein | 90 | 80 | 70 | 60 | 50 | 40 | 30 | 20 | 10 | 5 |
| | Soybean protein material A | 5 | ← | ← | ← | ← | ← | ← | ← | ← | ← |
| | Dextrin | 5 | 15 | 25 | 35 | 45 | 55 | 65 | 75 | 85 | 90 |
| | Water | 100 | ← | ← | ← | ← | 140 | *155* | 170 | 185 | 200 |
| Conditions | Emulsification pressure (Mpa) | 18 | ← | ← | ← | ← | ← | ← | ← | ← | ← |
| Evaluation | Emulsion particle size (µm) | 1.00 | 0.65 | 0.59 | 0.61 | 0.65 | 0.61 | 0.61 | *0.55* | 0.52 | 0.45 |

### ICP formulation

According to the formulation and conditions in Table 4, hydrophilic powdered oil and/or fat as an instant creaming powder (ICP) was prepared in the same manner as in Example 1 (Examples 28 to 30, Comparative Examples 6 to 7). In the evaluation, in addition to the emulsion particle size after redissolution, the whitening property as ICP, feathering, and oil-off were also evaluated, and then comprehensive evaluation was performed.

The results are shown in Table 4, and in each Example using the soybean protein material A, good ICP was prepared; however, in the case of acacia gum (Comparative Example 6) and only synthetic emulsifier (Comparative Example 7), the emulsion particle size was large, and the physical properties were not suitable for ICP.

**(Table 4) Study on ICP preparation**

| | (mass%) | Example 28 | Example 29 | Example 30 | Comparative Example 6 | Comparative Example 7 |
|---|---|---|---|---|---|---|
| Formulation | Palm kernel oil | 80 | 60 | 40 | 40 | 70 |
| | Soybean protein material A | 8 | 6 | 4 | | |
| | Monoglyceride | | | | | 2 |
| | Lecithin | | | | | 0.2 |
| | Acacia gum | | | | 60 | |
| | Maltose | 12 | 34 | 56 | | 27.8 |
| | Water | 100 | ← | ← | 600 | ← |
| Conditions | Emulsification pressure (Mpa) | 50 | ← | ← | ← | ← |
| Evaluation | Emulsion particle size (µm) | 0.83 | 0.57 | 0.47 | 1.8 | 1.64 |
| | Whitening property | 4 | 4 | 4 | 2 | 2 |
| | Feathering | 3 | 4 | 4 | 3 | 2 |
| | Oil off | 3 | 4 | 4 | 2 | 2 |
| | Comprehensive evaluation | Acceptable | Acceptable | Acceptable | Unacceptable | Unacceptable |

### MCT-containing hydrophilic powdered oil and/or fat

Hydrophilic powdered oil and/or fat was prepared in the same manner as in Example 1 according to the formulation and conditions in Table 5 using MCT ("MCT-64" available from Fuji Oil Co., Ltd.) (Examples 31 to 33, Comparative Example 8). The results are shown in Table 5, and hydrophilic powdered oil and/or fat was prepared without any problem even when MCT was used. Although dextrin was not essential, the emulsion particle size tended to decrease as the content of dextrin increased.

**(Table 5) Study on MCT formulation**

| | (mass%) | Example 31 | Example 32 | Example 33 | Comparative Example 8 |
|---|---|---|---|---|---|
| Formulation | MCT | 90 | 80 | 70 | ← |
| | Soybean protein material A | 10 | ← | ← | |
| | Acacia gum | | | | 30 |
| | Dextrin | | 10 | 20 | |
| | Water | 100 | 100 | 100 | 300 |
| Conditions | Emulsification pressure (Mpa) | 18 | ← | ← | ← |
| Evaluation | Emulsion particle size (µm) | 0.52 | 0.51 | 0.47 | 4.39 |

### Preparation with almond milk

400 parts by mass of warm water was mixed with 100 parts by mass of commercially available almond poudre ("Almond poudre pure 100% " available from Sagami Sangyo Co., Ltd.), the pH was adjusted to 7.0 with sodium hydroxide, and insoluble fibers were removed by centrifugation operation (1000×G, 10 minutes) to obtain almond milk (water content: 78.5%, crude protein: 6.8%, lipid: 13.5%, carbohydrate: 1.0%, Aash: 0.3%·each mass%). Thereafter, according to the formulation and conditions in Table 6, hydrophilic powdered oil and/or fat was prepared in the same manner as in Example 1 (Example 34, Comparative Example 9).

### Preparation with coconut milk

Hydrophilic powdered oil and/or fat was prepared in the same manner as in Example 1 using commercially available coconut milk (available from YOUKI FOOD Co., Ltd.) (water content: 76.9%, crude protein: 2.1%, lipid: 17.0%, carbohydrate: 4.1%, ash: 0.1%·each mass%) as a raw material according to the formulation and conditions in Table 6 (Example 35, Comparative Example 10).

For the evaluation of the hydrophilic powdered oil and/or fat using almond milk and coconut milk, in addition to the emulsion particle size after redissolution, penetration was measured, comprehensive evaluation based on the suppression effect was performed, and the results were shown in Table 6. In each Example using the soybean protein material A, good ICP was prepared, whereas in both of Comparative Examples using acacia gum, the emulsion particle size was large, and there was a lot of penetration. From these, it was found that the hydrophilic powdered oil and/or fat of the present invention was also prepared from an oil-in-water emulsion prepared in advance.

**(Table 6) Plant milk**

| | (mass%) | CP (asis%) | Lipid (asis%) | Example 34 | Comparative Example 9 | Example 35 | Comparative Example 10 |
|---|---|---|---|---|---|---|---|
| Formulation | Almond milk | 6.8 | 13.5 | 98 | ← | | |
| | Coconut milk | 2.1 | 17.0 | | | 98 | ← |
| | Soybean protein material A | 80.3 | | 2 | | 2 | |
| | Dextrin | | | | 2 | | 2.0 |
| | Water | | | 350 | ← | 150 | ← |
| Conditions | Emulsification pressure (Mpa) | | | 18 | ← | ← | ← |
| Evaluation | Emulsion particle size (µm) | | | 1.3 | 3.5 | 1.8 | 5.5 |
| | Suppression of penetration | | | 0.20 % | 0.70 % | 0.31 % | 1.10 % |
| | Comprehensive evaluation | | | Acceptable | Unacceptable | Acceptable | Unacceptable |

### Oxidation stability of oil and/or fat

According to the formulation and conditions in Table 7, hydrophilic powdered oil and/or fat was prepared by the same method as in Example 1 (Example 36, Comparative Example 11). As the linseed oil, "refined linseed oil" available from Summit Oil Mill was used, and the presence or absence of flavor (odor) after light-shielding storage at 40°C for 60 days and the POV after light-shielding storage at 60°C for 30 days were used for evaluation.

The results are shown in Table 7, and in Comparative Examples compared with Examples, the emulsion particle size was large, an odor due to storage was severe, and the POV was also very high. It was found that the present invention had an effect of suppressing oxidation of easily oxidizable oil and/or fat.

**(Table 7) Oxidation stability**

| | (mass%) | | Example 36 | Comparative Example 11 |
|---|---|---|---|---|
| Formulation | Soybean protein material A | | 20 | |
| | Acacia gum | | | 40 |
| | Dextrin | | 20 | |
| | Water | | 150 | 350 |
| Conditions | Emulsification pressure (Mpa) | | 18 | ← |
| Evaluation | Emulsion particle size (µm) | | 0.67 | 4.85 |
| | Flavor | Before storage | 5 | 4 |
| | | After storage | 4 | 1 |
| | POV | After storage | 8.5 | 65.3 |
| | Comprehensive evaluation | | Acceptable | Unacceptable |

### Granulation treatment

30 parts by mass of dextrin "AMYCOL 6H" (available from Nippon Starch Chemical Co., Ltd.) was stirred and mixed with 100 parts by mass of hot water at 70°C using a homomixer to prepare a saccharide solution. Using a flow coater (available from OKAWARA MFG. CO., LTD.), 1000 parts by mass of the ICP prepared in Example 28 was sprayed with the saccharide solution as a binder solution, and granulation treatment was performed at 65°C.

The dispersibility of particles obtained by this processing treatment in water was further improved.

### Industrial Applicability

According to the present invention, a hydrophilic powdered oil and/or fat represented by instant creaming powder can be obtained by reducing animal raw materials including milk and synthetic emulsifiers or without using them. This makes it possible to broaden choices of consumers and provide these powders having sufficient functions according to the application.

## Claims

1. A hydrophilic powdered oil and/or fat comprising 3 parts by mass or more of a protein material having properties described below based on 100 parts by mass of an oil and/or fat, wherein the protein material has properties such that an aqueous solution of the protein material having a crude protein content of 20 mass% exhibits a viscosity of 10000 mPa·s or less as measured at 25°C after being heated at 80°C for 30 minutes, and the protein material has a 0.22 M TCA solubility of from 30% to 95%.

2. The hydrophilic powdered oil and/or fat according to claim 1, wherein the protein material has an NSI of 80 or more.

3. The hydrophilic powdered oil and/or fat according to claim 1, wherein when dispersed in water, the hydrophilic powdered oil and/or fat forms an oil-in-water emulsion having an average emulsion particle size of 3 µm or less.

4. The hydrophilic powdered oil and/or fat according to claim 1, wherein the protein material has an NSI of 80 or more, and when dispersed in water, the hydrophilic powdered oil and/or fat forms an oil-in-water emulsion having an average emulsion particle size of 3 µm or less.

5. The hydrophilic powdered oil and/or fat according to any one of claims 1 to 3, wherein the hydrophilic powdered oil and/or fat is an instant creaming powder.

6. The instant creaming powder according to claim 5, wherein the instant creaming powder contains 30 mass% or more of an oil and/or fat and 10 mass% or more of a carbohydrate, and a total mass of the oil and/or fat and the carbohydrate is 50 mass% or more of dry mass.

7. The hydrophilic powdered oil and/or fat according to claim 4, wherein the hydrophilic powdered oil and/or fat is an instant creaming powder.

8. The instant creaming powder according to claim 7, wherein the instant creaming powder contains 30 mass% or more of an oil and/or fat and 10 mass% or more of a carbohydrate, and a total mass of the oil and/or fat and the carbohydrate is 50 mass% or more of dry mass.

9. A method for producing a hydrophilic powdered oil and/or fat, the method comprising drying an oil-in-water emulsion containing 3 parts by mass or more of a protein material having properties described below based on 100 parts by mass of an oil and/or fat, wherein the protein material has properties such that an aqueous solution of the protein material having a crude protein content of 20 mass% exhibits a viscosity of 10000 mPa·s or less as measured at 25°C after being heated at 80°C for 30 minutes; the protein material has a 0.22 M TCA solubility of from 30% to 95%; and the protein material has an NSI of 80 or more.

10. The method for producing a hydrophilic powdered oil and/or fat according to claim 9, wherein a plant milk is used for a part or all of the oil and/or fat.

11. The method for producing a hydrophilic powdered oil and/or fat according to claim 9, wherein the hydrophilic powdered oil and/or fat is an instant creaming powder.

12. The method for producing a hydrophilic powdered oil and/or fat according to claim 10, wherein the hydrophilic powdered oil and/or fat is an instant creaming powder.

13. A method for producing the instant creaming powder described in claim 11, wherein the instant creaming powder contains 30 mass% or more of an oil and/or fat and 10 mass% or more of a carbohydrate, and a total mass of the oil and/or fat and the carbohydrate is 50 mass% or more of dry mass.

14. A method for producing the instant creaming powder described in claim 12, wherein the instant creaming powder contains 30 mass% or more of an oil and/or fat and 10 mass% or more of a carbohydrate, and a total mass of the oil and/or fat and the carbohydrate is 50 mass% or more of dry mass.

15. A method for producing a granulated product, the method comprising granulating a hydrophilic powdered oil and/or fat or an instant creaming powder produced by the method described in any one of claims 9 to 14.
